# EUROPEAN PATENT SPECIFICATION

(11) **EP 4 088 016 B1**
(45) Date of publication and mention of the grant of the patent: **06.11.2024**
(21) Application number: 21703115.2
(22) Date of filing: 08.01.2021
(51) Int. Cl.: F02M 21/04, F02M 26/05, F02M 26/10, F02M 26/19, F02M 35/10

(54) **PASSIVE PUMPING FOR RECIRCULATING EXHAUST GAS**
PASSIVES PUMPEN ZUR ABGASRÜCKFÜHRUNG
POMPAGE PASSIF POUR RECIRCULATION DE GAZ D'ÉCHAPPEMENT

(30) Priority: 08.01.2020 US 202062958645 P
(43) Date of publication of application: 16.11.2022
(73) Proprietor: Woodward, Inc., Fort Collins, CO 80524 (US)
(72) Inventor: MASTBERGEN, Daniel, B., Fort Collins, CO 80524 (US)
(74) Representative: Fish & Richardson P.C.
(86) International application number: PCT/US2021/012654
(87) International publication number: WO 2021/142229

(56) References cited:
- WO-A2-2008/013585
- CN-A- 110 630 409
- DE-A1- 102017 119 549
- DE-A1- 19 857 577
- DE-C1- 4 429 232
- US-A1- 2015 285 192
- US-A1- 2019 093 604

## Description

### CLAIM OF PRIORITY

This application claims priority to U.S. Provisional Patent Application No. 62/958,645, filed January 8, 2020.

### TECHNICAL FIELD

This disclosure relates to exhaust recirculation (EGR) systems for internal combustion engines.

### BACKGROUND

Exhaust gas recirculation, especially cooled EGR, can be added to internal combustion engine systems to reduce NOx emissions and reduce knock tendency. In such a system, an amount of exhaust gas is added to the air and/or fuel mixture within the air-intake manifold of the engine. The challenge is that there is a cost to deliver the cooled EGR (cEGR), especially for high efficiency engines which generally are most efficient when the exhaust manifold pressure is lower than the intake manifold pressure. The pressure difference creates a positive scavenging pressure difference across the engine which scavenges burn gas from the cylinder well and provides favorable pressure-volume pumping loop work. It is particularly challenging to deliver cEGR from its source at the exhaust manifold to the intake manifold without negatively impacting the residual gas scavenging and efficiency of the engine cycle via the pumping loop. The "classic" high pressure loop cEGR system plumbs the exhaust gas directly to the intake manifold, which requires either design or variable turbocharging to force the engine exhaust manifold pressure to be higher than the intake manifold, which in turn, unfavorably reduces scavenging of hot burned gases and engine P-V cycle and loses efficiency. It is particularly counterproductive since the purpose of the cEGR is to reduce the knock tendency to improve efficiency and power density. However, this classic method to drive EGR actually increases the knock tendency through residual gas retention and reduces efficiency thru negative pressure work on the engine - in a manner of diminishing returns, i.e., two steps forward to reduce knock with cEGR, but one step back due to how it is pumped, leading to a zero gain point where the cost of driving cEGR counteracts the benefits of delivering it.

DE 198 57 577 A1 shows a conventional exhaust gas feedback system for an internal combustion engine. DE 10 2017 119549 A1 shows conventional systems and methods for an exhaust gas recirculation mixer.

### SUMMARY

This disclosure describes technologies relating to recirculating exhaust gas. A mixer according to the present invention is defined by claim 1. An engine system according to the present invention is defined by claim 12. A method according to the present invention is defined by claim 16. Further advantageous developments of the present invention are set out in the dependent claims.

Particular implementations of the subject matter described herein can have one or more of the following advantages. The exhaust gas recirculation mixer can allow recirculating exhaust gas into a pressurized engine intake, such as in a supercharged or turbocharged engine, when the exhaust gas source is at a lower pressure than the intake. In certain instances, the mixer can enable admission of exhaust gas even when the internal combustion engine is running under high-load and high boost. At such high-load high boost conditions, EGR is needed the most but it is also most difficult to supply the EGR, due to the higher pressure in the intake system over the exhaust. Moreover, the mixer can mitigate high back pressure in the exhaust system, which prevents burned gas from effectively leaving the combustion chamber and, itself, promotes knock. The mixer is a passive pump, relying on the area reduction of the primary gas stream to accelerate the gas to a high velocity. The accelerated gas causes a low pressure using the Bernoulli's effect, followed by the creation of a free jet of the gas into a receiver chamber. The free jet generated low pressure acts as a suction in the receiver chamber, which when connected to the EGR path, manifests as a pressure below the exhaust manifold creating a favorable pressure gradient for the EGR to flow to the lower pressure to admit exhaust gas into the mixer. Following the mixer, the reverse Bernoulli effect converts the high velocity gas mixture to a high pressure when it is decelerated into the engine intake manifold. Thus, it mitigates system efficiency losses attributable to the pumping work needed to operate more conventional EGR systems and the negative scavenging pressures across the engine. The mixer is also quite simple in construction, and needs no working parts to operate. The mixer can also be mechanically designed to have different primary flow nozzles which can be modular (e.g., threaded on/off the change out), interchangeably fitted for a wide range of engine displacement families. Further, the mixer creates internal turbulence that promotes mixing of the EGR, air and fuel. Further, the mixer can receive fuel, and operate to mix the fuel, air and EGR. Thus, some implementations 1) reduce the pressure difference across the engine to drive EGR from the exhaust manifold to the intake manifold - under any back pressure to intake pressure ratio, 2) including the special case when it is desirable to maintain the back pressure equal to or below the intake pressure - which (a) improves efficiency (due to the reduction of Pumping Mean Effective Pressure (PMEP) and (b) reduces the retention of hot burned gases trapped inside the combustion chamber which themselves increase the very knock tendency that the active cooled EGR is attempting to reduce, (3) the addition of high velocity fuel enhances the Jet and suction effect, (4) can simplify the fuel delivery system by eliminating the pressure regulator and preheater circuit since the mixer favors high pressure fuel and cold fuel to cool the EGR using the Joules-Thomson effect (fuel jetting will cause the temperature to drop - which is favorable since cooled EGR and cooled intake air are beneficial to engine operation). By using four barrels, a similar total inlet area and outlet area can be used as compared to a single-barrel exhaust gas recirculation mixer, while reducing the total length of the mixer to be substantially half that of a single-barrel mixer.

The details of one or more implementations are set forth in the accompanying drawings and the description below. Other features, aspects, and advantages will become apparent from the description, the drawings, and the claims.

### BRIEF DESCRIPTION OF THE DRAWINGS

FIG. 1 is a schematic diagram of an example internal combustion engine system.
FIG. 2 is a perspective view of an example exhaust gas recirculation mixer.
FIG. 3A is a side half cross sectional view of the example exhaust gas recirculation mixer of FIG. 2.
FIG. 3B is a half cross sectional view of the example exhaust gas recirculation mixer of FIG. 2. This view is 45° from the half cross sectional view shown in FIG. 3A.
FIG. 4 is a block diagram of an example controller that can be used with aspects of this disclosure.

Like reference numbers and designations in the various drawings indicate like elements.

### DETAILED DESCRIPTION

Exhaust gas recirculation (EGR) can have parasitic effects on an engine system, that is, it can reduce the effective power output of an engine system as energy is required to move exhaust gas from an exhaust manifold and into an intake manifold. This is especially problematic on forced induction engines where the intake manifold pressure can be higher than the exhaust manifold pressure. Ironically, EGR is most needed when the intake manifold pressure is high, such as when the engine is running at high load. In the case of a turbo-charged engine, increased back-pressure within the exhaust manifold can also contribute to knock under high loads.

The concepts herein relate to an EGR system that can be used on an internal combustion engine, including a forced induction internal combustion engine. A set of jet pumps arranged in parallel is added to the air intake system of the engine between the throttle and the intake manifold. If a compressor is provided in the intake system, the jet pumps can be placed downstream of the compressor (although it could alternatively be placed upstream of the compressor, too). Air, the primary fluid, flows through a central flow passage of each of the jet pumps from the throttle towards the intake manifold. In a low pressure receiver region within each jet pump, recirculated exhaust gas is added to each air stream from the exhaust manifold. The lower effective pressure in each receiver region allows for a pressure differential to form between the exhaust manifold and the receiver. The reverse Bernoulli Effect recovers the pressure by slowing down the high velocity/low pressure gas to create a pressure in the intake manifold that is equal to or higher than the exhaust manifold. So, at the system level, the jet pumps enable the exhaust gas to flow from the exhaust manifold to the intake manifold even when the exhaust manifold is at a lower pressure. Fuel can be added to the air stream upstream of the convergent end of the convergent nozzles. Turbulence is produced within the jet pumps and downstream of the jet pumps leading to a well-mixed, combustible mixture flowing into the manifold.

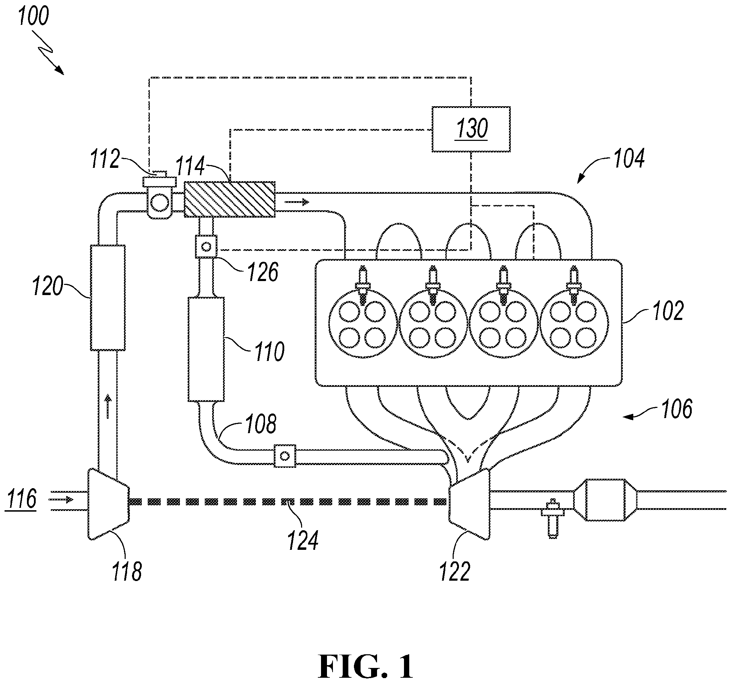

FIG. 1 shows an example engine system 100. The engine system 100 includes an intake manifold 104 configured to receive a combustible mixture to be combusted within a combustion chamber of the engine 102. That is, the intake manifold is fluidically coupled to a source of oxygen and a source of fuel. The combustible mixture can include air and any combustible fluid, such as natural gas, atomized gasoline, or diesel. While the illustrated implementation includes a four-cylinder engine 102, any number of cylinders can be used. Also, while the illustrated implementation includes a piston engine 102, aspects of this disclosure can be applied to other types of internal combustion engines, such as rotary engines or gas turbine engines.

A throttle 112 is positioned upstream of the intake manifold 104. The throttle 112 is configured to at least partially or entirely regulate an air flow into the intake manifold from the ambient environment 116, for example, by changing a cross-sectional area of a flow passage going through the throttle 112. In some implementations, the throttle 112 can include a butterfly valve or a disc valve. Reducing the cross-sectional area of the flow passage through the throttle 112 reduces the flowrate of air flowing through the throttle 112 towards the intake manifold 104.

An exhaust manifold 106 is configured to receive combustion products (exhaust) from a combustion chamber of the engine 102. That is, the exhaust manifold 106 is fluidically coupled to an outlet of the combustion chamber. An EGR flow passage 108 or conduit fluidically connects the exhaust manifold 106 and the intake manifold 104. In the illustrated implementation, an EGR throttle valve 126 is located within the EGR flow passage 108 between the exhaust manifold 106 and the intake manifold 104 and is used to regulate the EGR flow. The EGR throttle valve 126 regulates the EGR flow by adjusting a cross-sectional area of the EGR flow passage 108 going through the EGR throttle valve 126. In some implementations, the EGR throttle valve 126 can include a butterfly valve, a disc valve, a needle valve, a globe valve, or another style of valve.

The EGR flow passage 108 feeds into an EGR mixer 114 that is located downstream of a throttle 112 and upstream of the intake manifold 104 in the illustrated implementation. The EGR mixer 114 is in the engine intake system, fluidically connected to the throttle 112, the intake manifold 104, and the EGR flow passage 108. The fluid connections can be made with conduits containing flow passages that allow fluid flow. In some implementations, the EGR mixer 114 can be included within a conduit connecting the intake manifold 104 to the throttle 112, within the intake manifold 104 itself, within the EGR flow passage 108, integrated within the throttle 112, or integrated into the EGR throttle valve 126. Details about an example EGR mixer are described throughout this disclosure.

In some implementations, an exhaust gas cooler 110 is positioned in the EGR flow passage 108 between the exhaust manifold 106 and the EGR mixer 114. The exhaust gas cooler 110 can operate to lower a temperature of the exhaust gas prior to the EGR mixer 114. The exhaust gas cooler 110 is a heat exchanger, such as an air-air exchanger or an air-water exchanger. In some implementations, the exhaust gas cooler 110 is not included.

In some implementations, the engine system 100 includes a compressor 118 upstream of the throttle 112. In an engine with a compressor 118 but no throttle, such as an un-throttled diesel engine, the throttle is not needed and the mixer can be down stream of the compressor. The compressor 118 can include a centrifugal compressor, a positive displacement compressor, or another type of compressor for increasing a pressure within the intake manifold 104 during engine operation. In some implementations, the engine system 100 can include an intercooler 120 that is configured to cool the compressed air prior to the air entering the manifold. In the illustrated implementation, the compressor 118 is a part of a turbocharger. That is, a turbine 122 is located downstream of the exhaust manifold 106 and rotates as the exhaust gas expands through the turbine 122. The turbine 122 is coupled to the compressor 118, for example, via a shaft 124, and imparts rotation on the compressor 118. In the illustrated implementation, the turbine 122 also increases a back-pressure within the exhaust manifold 106, thereby increasing the pressure within the EGR flow passage 108. While the illustrated implementation utilizes a turbocharger to increase the pressure within the intake manifold 104, other methods of compression can be used, for example an electric or engine powered compressor (e.g., supercharger). In some implementations, a separate controller 130 or engine control unit (ECU) is used to control various aspects of the system operation. For example, the controller 130 can adjust air-fuel ratios, spark timing, and EGR flow rates based on current operating conditions.

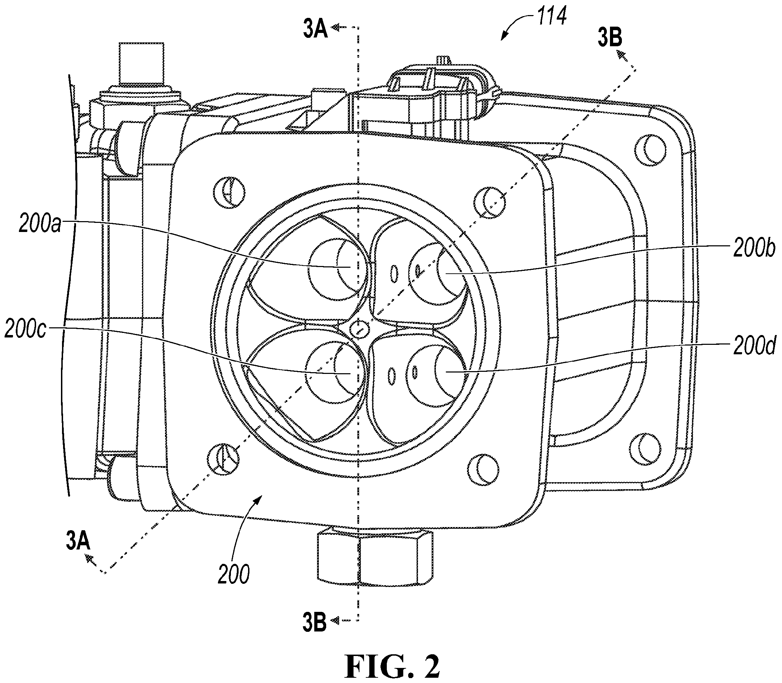

FIG. 2 is a perspective view of the example exhaust gas recirculation mixer 114. The exhaust gas recirculation mixer 114 includes four jet pumps, or barrels 200, all arranged in parallel. In the illustrated perspective view, barrels 200a, 200b, 200c, and 200d are visible. By using four barrels, a similar total inlet area and outlet area can be used as compared to a single-barrel exhaust gas recirculation mixer, while reducing the total length of the exhaust gas recirculation mixer 114 to be substantially half that of a single-barrel mixer. An example single-barrel mixer is described in United States Patent number 10,316,803, filed on 25 September 2017. With the single barrel design, there is a fresh air core surrounded by mixed air/EGR. With the multi barrel design described herein, there are multiple fresh air cores, so the fresh air is better divided, distributed, mixed, or otherwise spread prior to entering the engine intake manifold 104. The improved mixing results in a more even distribution of fresh air, EGR, and fuel being distributed among the engine cylinders.

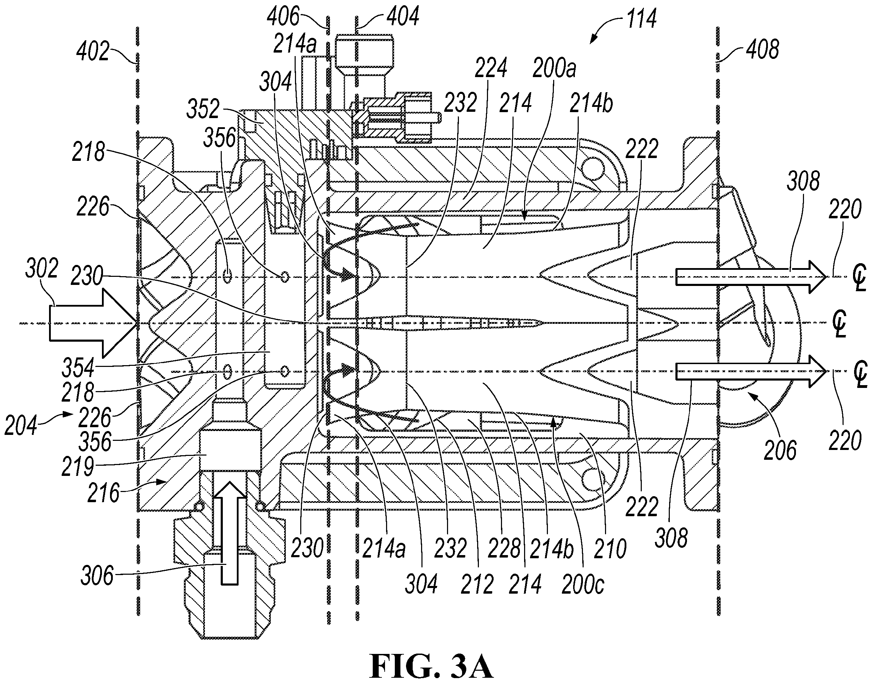

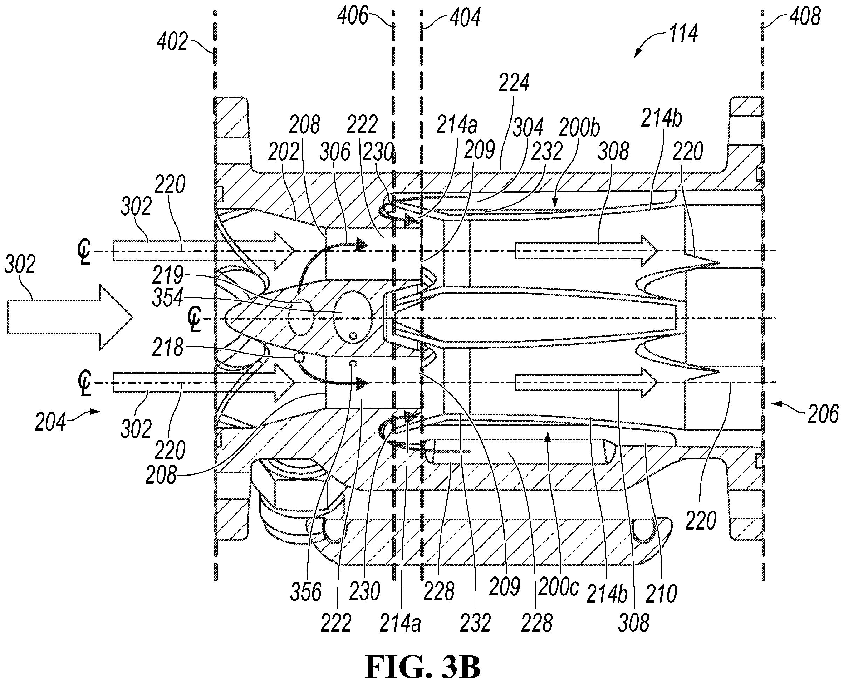

FIG. 3A is a side half cross sectional view of the example exhaust gas recirculation mixer 114 of FIG. 2. In this illustration, barrels 200a and 200c are visible. FIG. 3B is a half cross sectional view of the example exhaust gas recirculation mixer of FIG. 2. This view is 45° from the half cross sectional view shown in FIG. 3A. In this illustration barrels 200b and 200c are visible. It should be noted that the fourth barrel, 200d, is not visible in the present figures, but is structurally similar to the other barrels described herein. The following description is provided in reference to both FIG. 3A and FIG.3B unless otherwise specified.

The EGR mixer 114 is made up of one or more housings or casings. Openings in the end walls of the casings define an air inlet 204 and an outlet 206 of multiple interior flow passages 222, defined by each of the barrels 200. The interior flow passages 222 direct flow from the air inlet 204 to the outlet 206 to allow flow through the EGR mixer 114. Within a casing(s) 224, the EGR mixer 114 includes multiple convergent nozzles 202, each associated with a barrel 200, that define interior flow passages 222 in a flow path from an air inlet 204 of the EGR mixer 114 to an outlet 206 of the EGR mixer 114. The convergent nozzles 202 each converge toward the outlet of the EGR mixer 114. That is, each of the convergent nozzles 202 converge in the direction of flow toward a convergent end 208. That is, the downstream end (outlet) of the convergent nozzle 202 has a smaller cross-sectional area, i.e., a smaller flow area, than the upstream end (inlet) 226 of the convergent nozzle 202. In some implementations, the inlets 226 of the convergent nozzles 202 are in a same, first plane 402, and corresponding outlets of the convergent nozzles 202 are in a same, second plane 404. In other words, the components of each barrel 200 are aligned in parallel such that each component receives fluid flow in parallel with one-another within standard manufacturing tolerances.

The EGR mixer 114 includes an exhaust gas receiver housing 210 and the exhaust gas receiver housing 210 includes one or more exhaust gas inlets 212 fed from and fluidically connected to the EGR flow passages 108, and into an interior receiver cavity 228 of the exhaust gas receiver housing 210. In the illustrated implementation, the exhaust gas receiver housing 210 surrounds the convergent nozzles 202, such that a portion of the convergent nozzle 202 is within the interior receiver cavity 228. In some implementations, convergent-divergent nozzles 214 of each barrel 200 can be within the interior receiver cavity 228 as well. The convergent nozzles 202 are positioned to each form a free jet of gas out of the convergent end 208 of each nozzle 202. Also, the exhaust gas inlet 212 is upstream of an outlet 209, of each convergent nozzle 202. While the illustrated implementation shows an outlet 209 separate from a convergent end 208, other arrangements can be used, for example, the outlet 209 and the convergent end 208 can both be in the second plane 404 in some implementations. While the illustrated implementation shows the outlet 209 to extend (at least partially or entirely) within the exhaust gas receiver housing 210, other designs can be utilized. In some implementations, the air inlet 204 and the outlet 206 are provided with attachments or fittings to enable connection to the intake manifold 104 of the engine 102 and/or the EGR mixer 114. In some instances, the convergent nozzles 202 can be modularly interchangeable with convergent nozzles of different the inlet area 226 and convergent area 208, making the system readily changeable to fit multiple engine sizes. For example, the nozzles 202 can be provided with threads or another form of removable attachment to the remainder of the mixer casing 224. In some implementation, the convergent nozzles 202 can be integrated into the mixer casing 224 as a single, unitary piece.

Within each barrel 200, a convergent-divergent nozzle 214 is downstream of the convergent end 208 of a corresponding convergent nozzle 202 and is fluidically coupled to receive fluid flow from the outlet 206, the exhaust gas inlet 212, and, in certain instances, a fuel supply 216. In other words, the convergent-divergent nozzle 214 can act as an air-fuel-exhaust gas inlet for the intake manifold 104 (FIG. 1). The air-exhaust gas inlet 230 of each of the convergent-divergent nozzles 214 is in a same, third plane 406 that is perpendicular to the flow path. The corresponding outlet of each of the convergent-divergent nozzles 214 is in a same, fourth plane 408 that is perpendicular to the flow path and downstream of plane 402, plane 404, and plane 406. In other words, the components of each barrel are aligned in parallel such that each component receives fluid flow in parallel with one-another within standard manufacturing tolerances. To help facilitate mixing, an air-exhaust gas inlet 230 of each convergent-divergent nozzle 214 has a greater area than corresponding outlet 209. Each convergent-divergent nozzle 214 includes three parts: an air-exhaust gas inlet 230, a throat 232, and an outlet 206. The throat 232 is the narrowest point of each of the convergent-divergent nozzles 214 and is located and fluidically connected downstream of the air-exhaust gas inlet 230 of each of the convergent-divergent nozzles 214. The narrowing of the convergent-divergent nozzles 214 at the throat 232 increases a flow velocity of a fluid flow as it passes through each convergent-divergent nozzle 214. The outlet 206 of each of the convergent-divergent nozzles 214 is fluidically connected to and upstream of the intake manifold 104. Between the throat 232 and the outlet 206, the cross-section of the flow passage through the convergent-divergent nozzle 214 increases. The increase in cross-sectional area slows the flow velocity and increases the pressure of the fluid flow. In certain instances, the increase in cross-sectional area can be sized to increase a pressure within the EGR mixer 114 so that the pressure drop across the EGR mixer 114 is zero, nominal, or otherwise small. In some implementations, a divergent portion 214b of each of the convergent-divergent nozzles 214 diverges no more than 7°. The divergent portion 214b of each convergent-divergent nozzle 214 can diverge linearly or with a curve flaring outward. The convergent-divergent nozzle 214 can include threads or another form of removable attachment at the air-exhaust gas inlet 230, the outlet 206, or both to allow the convergent-divergent nozzle 214 to be installed and fluidically connected to the remainder of the intake of the engine system 100. Like the convergent nozzle 202, the convergent-divergent nozzle 214 can be modularly interchangeable with nozzles 214 of a different inlet 230, throat 232, and outlet 206 areas too make the system readily changeable to fit multiple engine sizes. In some implementation, multiple convergent-divergent nozzles 214 can be integrally formed into a single unitary piece.

In some implementations, the convergent nozzles 202 and the convergent-divergent nozzles 214 within each barrel 200 to be aligned at a same center axis 220, but in some implementations, the center axis 220 of the convergent nozzle 202 and the convergent-divergent nozzle 214 within each barrel 200 might not be aligned or parallel. For example, space constraints may require the EGR mixer 114 to have an angle between the axis of each of the convergent nozzles 202 and their corresponding convergent-divergent nozzles 214. In some implementations, rather than having a substantially straight flow passage as shown in FIGS. 3A-3B, the flow passage may be curved.

In some implementations, the fuel supply 216 includes a fuel manifold 219 and fuel supply ports 218 upstream of each of the convergent ends 208 of the convergent nozzles 202 within the air flow path. Each fuel supply port 218 is configured to supply fuel into the air flow path and upstream of a corresponding convergent nozzle 202. In some implementations, the fuel supply port 218 can be a gaseous fuel supply port, coupled to a source of gaseous fuel; however, the fuel delivered by the fuel supply port 218 can include any combustible fluid, such as natural gas, gasoline, or diesel. The fuel supply port 218 supplies a fuel flow 306 from a fuel manifold 219. Though illustrated with a single fuel port 218 within each barrel supplied by the common fuel manifold 219, separate, discrete fuel supplies with separate, discrete ports can be used with similar effect. While shown as a single port within each barrel, the fuel supply ports 218 can be configured in other ways, for example, as multiple fuel supply ports along the perimeter of each barrel, or in another manner. While the illustrated implementation shows a fuel supply port 218 configured to inject fuel upstream of the convergent end 208 of the convergent nozzle 202, fuel can also be added with a fuel supply port 218 upstream of the exhaust gas inlet 212. Such a port can include a gaseous fuel supply port.

A pressure port 356 is positioned downstream the convergent portion 203 of each of the convergent nozzles 202. The pressure port 356 provides a location to sense pressure downstream of a convergent end 208 of each of the convergent nozzles 202 by allowing fluid communication between the interior flow passage 222 and a common pressure sensing manifold 354. A pressure sensor 352 senses a pressure within the common pressure sensing manifold 354 and sends a signal to the controller 130 indicative of the pressure within the common pressure sensing manifold 354. Though illustrated with a single sensor on a common manifold, separate, discrete sensors with separate, discrete ports can be used with similar effect. Alternatively or in addition, a virtual sensor can be used in lieu of a discrete sensor. That is, the pressure can be calculated based on the known geometry of the convergent nozzles and other information received from various sensors throughout the system.

The pressure sensed by the pressure sensor 352 can be compared to a sensed pressure elsewhere either upstream or downstream of the EGR mixer 114 to determine a differential pressure. The determined differential pressure can be used to determine a mass air-flow (MAF) rate passing through the EGR mixer 114. In certain instances, such a calculation can be performed by the controller 130 (FIG. 1). The MAF rate can be used as an input for the controller to adjust a variety of parameters within the engine system 100. In certain instances, the controller 130 is an engine control unit (ECU) that controls some or all aspects of the engine system 100 operations, such as fuel supply, air, ignition and/or other engine operational parameters. In certain instances, the controller 130 is a separate control unit from the engine system's ECU. The controller 130 also need not send actuation and/or control signals to the engine system 100, but could instead provide information, such as the MAF and EGR flow rates, to an ECU for use by the ECU in controlling the engine system 100.

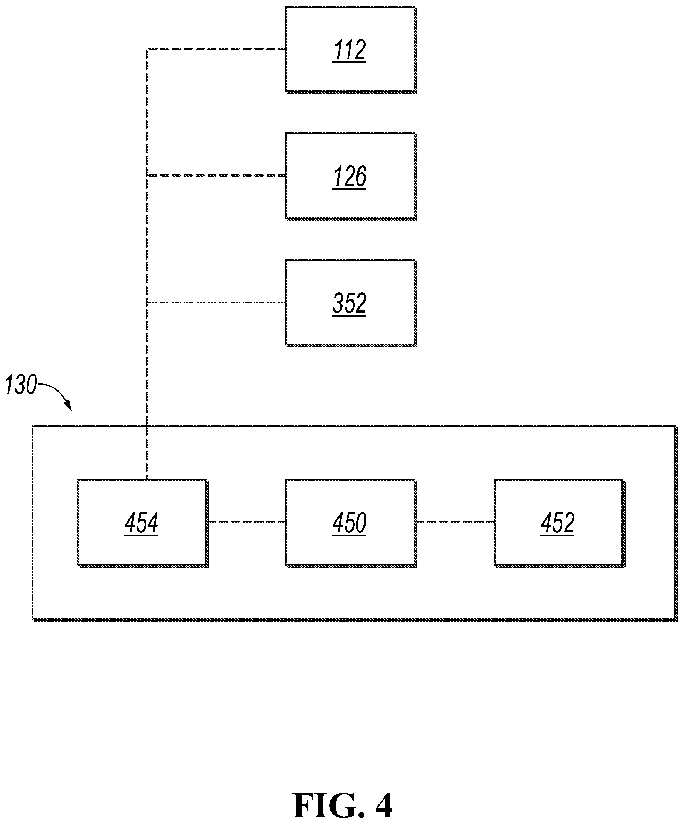

FIG. 4 is a block diagram of an example controller 130 that can be used with aspects of this disclosure. The controller 130 can, among other things, monitor parameters of the system and send signals to actuate and/or adjust various operating parameters of the system. As shown in FIG. 4, the controller 130 can include one or more processors 450 and non-transitory storage media (e.g., memory 452) containing instructions that cause the processors 450 to perform operations described herein. The processors 450 are coupled to an input/output (I/O) interface 454 for sending and receiving communications with components in the system, including, for example, the pressure sensor 352. In certain instances, the controller 130 can additionally communicate status with and send actuation and/or control signals to one or more of the various system components (including the throttle 112 and the EGR throttle valve 126) of the engine system 100, as well as other sensors (e.g., pressure sensors, temperature sensors, knock sensors, and other types of sensors) provided in the engine system 100.

The illustrated implementation operates as follows. The first set of convergent nozzles 202 each increase a velocity and decrease a pressure of a portion of an air flow 302 in the EGR mixer 114 to form multiple free jets exiting a corresponding convergent nozzle 202. An exhaust flow 304 is drawn into the EGR mixer 114 through the exhaust gas inlet 212 in response to (e.g., because of) the decreased pressure of each of the free jet air flows 302 exiting the convergent nozzles 202. The exhaust flow 304 is directed from the exhaust manifold 106 eventually to the point downstream of the convergent nozzles 202. The air flow 302, the exhaust flow 304, and a fuel flow 306 are mixed to form multiple mixed flows 308 that act as a combustion mixture. The mixed flows 308 are mixed with a second set of convergent nozzles 214a positioned downstream of the corresponding first convergent nozzles 202. Each of the second set of convergent nozzles 214a corresponds to a different one of the first set of convergent nozzles 202. A pressure of each of the mixed flows is increased, and a velocity of each of the mixed flows 308 is reduced with a set divergent nozzles 214b each corresponding to a different one of the second of convergent nozzles 214a. While each of the second set of convergent nozzles 214a and each of the set of divergent nozzles 214b are illustrated as unitary convergent-divergent nozzles 214, each of the second set of convergent nozzles 214a and each of the set of divergent nozzles 214b can be separate and distinct parts.

In the illustrated implementation, the fuel flow 306 is supplied into the air flow 302 with a fuel supply port 218 located on the side of each of the convergent nozzles 202. The fuel flow 306 is supplied upstream of the convergent end 208. In some implementations, the fuel flow 306 is supplied into the exhaust flow 304 with a fuel supply port 218. Regardless of the implementation used, the fuel flow 306 can include a gaseous fuel flow.

Certain features that are described in this disclosure in the context of separate implementations can also be implemented in combination in a single implementation. Conversely, various features that are described in the context of a single implementation can also be implemented in multiple implementations separately or in any suitable subcombination.

## Claims

1. An engine exhaust gas recirculation mixer (114) for an engine (102), the mixer (114) comprising:
a plurality of convergent nozzles (202) defining a plurality of flow passages (222) that extend alongside one another in a flow path from an engine intake air inlet (204) of the mixer (114) to an outlet (206) of the mixer (114), the plurality of convergent nozzles (202) each converging toward the outlet (206) of the mixer (114);
an exhaust gas receiver housing (210) comprising an exhaust gas inlet (212) into an interior of the exhaust gas receiver housing (210); and
a plurality of convergent-divergent nozzles (214) in the flow path each corresponding to one of the plurality of convergent nozzles (202), the plurality of convergent-divergent nozzles (214) extending alongside one another, the plurality of convergent-divergent nozzles (214) each comprising an air-exhaust gas inlet (230) in fluid communication to receive fluid flow from a corresponding convergent nozzle (202) and the interior of the exhaust gas receiver housing (210);
**characterized in that**:
the air-exhaust gas inlet (230) of each of the plurality of convergent-divergent nozzles (214) is an air-fuel-exhaust gas inlet in communication with a fuel supply (216) into the mixer (114), wherein
the fuel supply (216) comprises fuel supply ports (218) positioned upstream of the convergent-divergent nozzles (214), and
the fuel supply ports (218) are located on a side of each of the convergent nozzles (202) or downstream of a convergent end (208) of each of the convergent nozzles (202) and upstream of the exhaust gas inlet (212).

2. The engine exhaust gas recirculation mixer (114) of claim 1, wherein inlets (226) of each of the convergent nozzles (202) being in a same, first plane (402) perpendicular to the flow path, and corresponding outlets (209) of the convergent nozzles (202) being in a same, second plane (404) perpendicular to the flow path.

3. The engine exhaust gas recirculation mixer (114) of any one of the previous claims, wherein the air-exhaust gas inlet (230) of each of the convergent-divergent nozzles (214) being in a same, third plane (406) perpendicular to the flow path, and the corresponding outlet of each of the convergent-divergent nozzles (214) being in a same, fourth plane (408) perpendicular to the flow path.

4. The engine exhaust gas recirculation mixer (114) of claim 1, where the fuel supply ports (218) comprise gaseous fuel supply ports.

5. The engine exhaust gas recirculation mixer (114) of any one of the previous claims, where each of the convergent-divergent nozzles (214) are aligned on a same center axis (220) as a corresponding convergent nozzle (202).

6. The engine exhaust gas recirculation mixer (114) of any one of the previous claims, where each one of the air-exhaust gas inlets (230) is upstream of a corresponding outlet (209) of one the plurality of convergent nozzles (202).

7. The engine exhaust gas recirculation mixer (114) of any one of the previous claims, where the plurality of convergent nozzles (202) extend within the exhaust gas receiver housing (210).

8. The engine exhaust gas recirculation mixer (114) of any one of the previous claims, where each of the air-exhaust gas inlets (230) has a greater area than the corresponding outlet (209) of the corresponding one of the plurality of convergent nozzles (202).

9. The engine exhaust gas recirculation mixer (114) of any one of the previous claims, where the plurality of convergent nozzles (202) comprise four convergent nozzles (202) and the plurality of convergent-divergent nozzles (214) comprise four corresponding convergent-divergent nozzles (214).

10. The engine exhaust gas recirculation mixer (114) of any one of the previous claims, where a divergent portion (214b) of the convergent-divergent nozzle (214) diverges no more than 7°.

11. The engine exhaust gas recirculation mixer (114) of any one of the previous claims, comprising a plurality of pressure ports (356), for sensing pressure, at a convergent end (208) of each of the plurality of convergent nozzles (202).

12. An engine system (100) comprising:
an engine intake manifold (104) configured to receive a combustible mixture configured to be combusted within an engine combustion chamber;
a throttle (112) upstream of the intake manifold (104), the throttle (112) configured to regulate an air flow into the intake manifold (104);
an exhaust manifold (106) configured to receive combustion products from the combustion chamber; and
the exhaust gas recirculation mixer (114) of any one of the previous claims, the exhaust gas recirculation mixer (114) being positioned downstream of the throttle (112) and upstream of the intake manifold (104).

13. The engine system (100) of claim 12, comprising a compressor (118) upstream of the throttle (112), the compressor (118) configured to increase a pressure within the flow path.

14. The engine system of claim 13, comprising a turbine (122) downstream of the exhaust manifold (106), the turbine (122) being coupled to the compressor (118) and configured to rotate the compressor (118).

15. The engine system (100) of any one of claims 13-14, comprising an exhaust gas cooler (110) positioned within a flow path between the exhaust manifold (106) and the exhaust gas recirculation mixer (114), the exhaust gas cooler (110) configured to lower a temperature of the exhaust gas prior to the exhaust gas recirculation mixer (114).

16. A method comprising:
increasing a velocity and decreasing a pressure of an engine intake air flow using a first plurality of convergent nozzles (202) to form a plurality of free jets exiting a corresponding one of the plurality of converging nozzles (202);
drawing an engine exhaust flow through an exhaust gas inlet (212), in response to the decreased pressure of each of the plurality of free jets, downstream of the first plurality of convergent nozzles (202);
mixing, using a second plurality of convergent nozzles downstream of the first plurality of convergent nozzles (202), the each of the plurality of free jets and the exhaust flow to form a plurality of mixed flows corresponding to the plurality of free jets, each of the second plurality of convergent nozzles corresponding with a different one of the first plurality of convergent nozzles (202); and
increasing a pressure and reducing a velocity of the plurality of mixed flows using a plurality of divergent nozzles each corresponding to a different one of the second plurality of convergent nozzles;
**characterized in that**, the method further comprises:
mixing one of the plurality of free jets and the exhaust flow to form one of the pluralities of mixed flows comprises mixing a portion of the air flow, a portion of the exhaust flow, and a portion of a fuel flow, to form a combustion mixture; wherein
the method further comprises supplying the fuel flow upstream of the convergent ends (208) of the first plurality of convergent nozzles (208); and wherein
the fuel flow is supplied from fuel supply ports (218) which are located on a side of each of the convergent nozzles (202) or downstream of a convergent end (208) of each of the convergent nozzles (202) and upstream of the exhaust gas inlet (212).

17. The method of claim 16, where the fuel flow comprises a gaseous fuel flow.

18. The method of any one of claims 16-17, comprising directing the exhaust flow from an exhaust manifold (106) to a point downstream of the first plurality of convergent nozzles (202).

## Patentansprüche

1. Kraftmaschinen-Abgasrückführungsmischer (114) für eine Kraftmaschine (102), wobei der Mischer (114) Folgendes umfasst:
eine Mehrzahl von konvergenten Düsen (202), die eine Mehrzahl von Strömungsdurchgängen (222) definieren, die sich nebeneinander in einem Strömungsweg von einem Kraftmaschinen-Ansauglufteinlass (204) des Mischers (114) zu einem Auslass (206) des Mischers (114) erstrecken, wobei die Mehrzahl von konvergenten Düsen (202) jeweils hin zu dem Auslass (206) des Mischers (114) konvergieren;
ein Abgassammlergehäuse (210), das einen Abgaseinlass (212) in einen Innenraum des Abgassammlergehäuses (210) umfasst; und
eine Mehrzahl von konvergenten-divergenten Düsen (214) im Strömungsweg, die jeweils einer der Mehrzahl von konvergenten Düsen (202) entsprechen, wobei sich die Mehrzahl von konvergenten-divergenten Düsen (214) nebeneinander erstrecken, wobei die Mehrzahl von konvergenten-divergenten Düsen (214) jeweils einen Luft-Abgaseinlass (230) in Fluidverbindung zum Aufnehmen einer Fluidströmung von einer entsprechenden konvergenten Düse (202) und dem Innenraum des Abgassammlergehäuses (210) umfasst; **dadurch gekennzeichnet, dass**:
der Luft-Abgaseinlass (230) jeder der Mehrzahl von konvergenten-divergenten Düsen (214) ein Luft-Kraftstoff-Abgaseinlass in Verbindung mit einer Kraftstoffzufuhr (216) in den Mischer (114) ist, wobei die Kraftstoffzufuhr (216) Kraftstoffzufuhranschlüsse (218) umfasst, die stromaufwärts der konvergenten-divergenten Düsen (214) positioniert sind, und
sich die Kraftstoffzufuhranschlüsse (218) auf einer Seite jeder der konvergenten Düsen (202) oder stromabwärts eines konvergenten Endes (208) jeder der konvergenten Düsen (202) und stromaufwärts des Abgaseinlasses (212) befinden.

2. Kraftmaschinen-Abgasrückführungsmischer (114) nach Anspruch 1, wobei Einlässe (226) jeder der konvergenten Düsen (202) in einer gleichen, ersten Ebene (402) senkrecht zum Strömungsweg liegen, und entsprechende Auslässe (209) der konvergenten Düsen (202) in einer gleichen, zweiten Ebene (404) senkrecht zum Strömungsweg liegen.

3. Kraftmaschinen-Abgasrückführungsmischer (114) nach einem der vorhergehenden Ansprüche, wobei der Luft-Abgaseinlass (230) jeder der konvergenten-divergenten Düsen (214) in einer gleichen, dritten Ebene (406) senkrecht zum Strömungsweg liegt, und der entsprechende Auslass jeder der konvergenten-divergenten Düsen (214) in einer gleichen, vierten Ebene (408) senkrecht zum Strömungsweg liegt.

4. Kraftmaschinen-Abgasrückführungsmischer (114) nach Anspruch 1, wobei die Kraftstoffzufuhranschlüsse (218) Zufuhranschlüsse für gasförmigen Kraftstoff umfassen.

5. Kraftmaschinen-Abgasrückführungsmischer (114) nach einem der vorhergehenden Ansprüche, wobei jede der konvergenten-divergenten Düsen (214) auf einer gleichen Mittelachse (220) wie eine entsprechende konvergente Düse (202) ausgerichtet ist.

6. Kraftmaschinen-Abgasrückführungsmischer (114) nach einem der vorhergehenden Ansprüche, wobei jeder der Luft-Abgaseinlässe (230) stromaufwärts eines entsprechenden Auslasses (209) einer der Mehrzahl von konvergenten Düsen (202) liegt.

7. Kraftmaschinen-Abgasrückführungsmischer (114) nach einem der vorhergehenden Ansprüche, wobei sich die Mehrzahl von konvergenten Düsen (202) innerhalb des Abgassammlergehäuses (210) erstrecken.

8. Kraftmaschinen-Abgasrückführungsmischer (114) nach einem der vorhergehenden Ansprüche, wobei jeder der Luft-Abgaseinlässe (230) eine größere Fläche als der entsprechende Auslass (209) der entsprechenden der Mehrzahl von konvergenten Düsen (202) aufweist.

9. Kraftmaschinen-Abgasrückführungsmischer (114) nach einem der vorhergehenden Ansprüche, wobei die Mehrzahl von konvergenten Düsen (202) vier konvergente Düsen (202) umfasst und die Mehrzahl von konvergenten-divergenten Düsen (214) vier entsprechende konvergentedivergente Düsen (214) umfasst.

10. Kraftmaschinen-Abgasrückführungsmischer (114) nach einem der vorhergehenden Ansprüche, wobei ein divergenter Teil (214b) der konvergenten-divergenten Düse (214) um nicht mehr als 7° divergiert.

11. Kraftmaschinen-Abgasrückführungsmischer (114) nach einem der vorhergehenden Ansprüche, umfassend eine Mehrzahl von Druckanschlüssen (356) zum Erfassen von Druck an einem konvergenten Ende (208) jeder der Mehrzahl von konvergenten Düsen (202).

12. Kraftmaschinensystem (100), umfassend:
einen Kraftmaschinen-Einlasskrümmer (104), der dazu ausgelegt ist, ein brennbares Gemisch aufzunehmen, das dazu ausgelegt ist, innerhalb einer Kraftmaschinen-Brennkammer verbrannt zu werden;
eine Drossel (112) stromaufwärts des Einlasskrümmers (104), wobei die Drossel (112) dazu ausgelegt ist, einen Luftstrom in den Einlasskrümmer (104) zu regeln;
einen Abgaskrümmer (106), der dazu ausgelegt ist, Verbrennungsprodukte aus der Brennkammer aufzunehmen; und
den Abgasrückführungsmischer (114) nach einem der vorhergehenden Ansprüche, wobei der Abgasrückführungsmischer (114) stromabwärts der Drossel (112) und stromaufwärts des Einlasskrümmers (104) positioniert ist.

13. Kraftmaschinensystem (100) nach Anspruch 12, umfassend einen Kompressor (118) stromaufwärts der Drossel (112), wobei der Kompressor (118) dazu ausgelegt ist, einen Druck innerhalb des Strömungswegs zu erhöhen.

14. Kraftmaschinensystem nach Anspruch 13, umfassend eine Turbine (122) stromabwärts des Abgaskrümmers (106), wobei die Turbine (122) mit dem Kompressor (118) gekoppelt und dazu ausgelegt ist, den Kompressor (118) zu drehen.

15. Kraftmaschinensystem (100) nach einem der Ansprüche 13-14, umfassend einen Abgaskühler (110), der innerhalb eines Strömungswegs zwischen dem Abgaskrümmer (106) und dem Abgasrückführungsmischer (114) positioniert ist, wobei der Abgaskühler (110) dazu ausgelegt ist, eine Temperatur des Abgases vor dem Abgasrückführungsmischer (114) zu senken.

16. Verfahren, umfassend:
Erhöhen einer Geschwindigkeit und Verringern eines Drucks eines Kraftmaschinen-Ansaugluftstroms unter Verwendung einer ersten Mehrzahl von konvergenten Düsen (202), um eine Mehrzahl von Freistrahlen zu bilden, die aus einer entsprechenden der Mehrzahl von konvergierenden Düsen (202) austreten;
Ziehen eines Kraftmaschinen-Abgasstroms durch einen Abgaseinlass (212) in Reaktion auf den verringerten Druck jeder der Mehrzahl von Freistrahlen stromabwärts der ersten Mehrzahl von konvergenten Düsen (202);
Mischen, unter Verwendung einer zweiten Mehrzahl von konvergenten Düsen stromabwärts der ersten Mehrzahl von konvergenten Düsen (202), des jeweiligen der Mehrzahl von Freistrahlen und des Abgasstroms, um eine Mehrzahl von Mischströmen zu bilden, die der Mehrzahl von Freistrahlen entsprechen, wobei jede der zweiten Mehrzahl von konvergenten Düsen einer unterschiedlichen der ersten Mehrzahl von konvergenten Düsen (202) entspricht; und
Erhöhen eines Drucks und Reduzieren einer Geschwindigkeit der Mehrzahl von Mischströmen unter Verwendung einer Mehrzahl von divergenten Düsen, die jeweils einer unterschiedlichen der zweiten Mehrzahl von konvergenten Düsen entsprechen; **dadurch gekennzeichnet, dass** das Verfahren ferner Folgendes umfasst:
Mischen eines der Mehrzahl von Freistrahlen und des Abgasstroms, um einen der Mehrzahlen von Mischströmen zu bilden, umfasst Mischen eines Teils des Luftstroms, eines Teils des Abgasstroms und eines Teils eines Kraftstoffstroms, um ein Verbrennungsgemisch zu bilden; wobei das Verfahren ferner Zuführen des Kraftstoffstroms stromaufwärts der konvergenten Enden (208) der ersten Mehrzahl von konvergenten Düsen (208) umfasst; und wobei
der Kraftstoffstrom aus Kraftstoffzufuhranschlüssen (218) zugeführt wird, die sich auf einer Seite jeder der konvergenten Düsen (202) oder stromabwärts eines konvergenten Endes (208) jeder der konvergenten Düsen (202) und stromaufwärts des Abgaseinlasses (212) befinden.

17. Verfahren nach Anspruch 16, wobei der Kraftstoffstrom einen gasförmigen Kraftstoffstrom umfasst.

18. Verfahren nach einem der Ansprüche 16-17, umfassend Richten des Abgasstroms aus einem Abgaskrümmer (106) auf einen Punkt stromabwärts der ersten Mehrzahl von konvergenten Düsen (202).

## Revendications

1. Mélangeur (114) de recirculation de gaz d'échappement de moteur pour un moteur (102), le mélangeur (114) comportant :
une pluralité de tuyères convergentes (202) définissant une pluralité de passages (222) d'écoulement qui s'étendent les uns à côté des autres dans un trajet d'écoulement d'une entrée (204) d'air d'admission de moteur du mélangeur (114) à une sortie (206) du mélangeur (114), chacune de la pluralité de tuyères convergentes (202) convergeant vers la sortie (206) du mélangeur (114) ;
un carter (210) de récepteur de gaz d'échappement comportant une entrée (212) de gaz d'échappement donnant sur un intérieur du carter (210) de récepteur de gaz d'échappement ; et
une pluralité de tuyères convergentes-divergentes (214) dans le trajet d'écoulement correspondant chacune à une de la pluralité de tuyères convergentes (202), la pluralité de tuyères convergentes-divergentes (214) s'étendant les unes à côté des autres, la pluralité de tuyères convergentes-divergentes (214) comportant chacune une entrée (230) air-gaz d'échappement en communication fluidique pour recevoir un écoulement de fluide provenant d'une tuyère convergente (202) correspondante et l'intérieur du carter (210) de récepteur de gaz d'échappement ; **caractérisé en ce que** :
l'entrée (230) air-gaz d'échappement de chacune de la pluralité de tuyères convergentes-divergentes (214) est une entrée air-carburant-gaz d'échappement en communication avec une alimentation (216) en carburant entrant dans le mélangeur (114),
l'alimentation (216) en carburant comportant des orifices (218) d'alimentation en carburant positionnés en amont des tuyères convergentes-divergentes (214), et
les orifices (218) d'alimentation en carburant étant situés sur un côté de chacune des tuyères convergentes (202) ou en aval d'une extrémité convergente (208) de chacune des tuyères convergentes (202) et en amont de l'entrée (212) de gaz d'échappement.

2. Mélangeur (114) de recirculation de gaz d'échappement de moteur selon la revendication 1, des entrées (226) de chacune des tuyères convergentes (202) se trouvant dans un même premier plan (402) perpendiculaire au trajet d'écoulement, et des sorties correspondantes (209) des tuyères convergentes (202) se trouvant dans un même deuxième plan (404) perpendiculaire au trajet d'écoulement.

3. Mélangeur (114) de recirculation de gaz d'échappement de moteur selon l'une quelconque des revendications précédentes, l'entrée (230) air-gaz d'échappement de chacune des tuyères convergentes-divergentes (214) se trouvant dans un même troisième plan (406) perpendiculaire au trajet d'écoulement, et la sortie correspondante de chacune des tuyères convergentes-divergentes (214) se trouvant dans un même quatrième plan (408) perpendiculaire au trajet d'écoulement.

4. Mélangeur (114) de recirculation de gaz d'échappement de moteur selon la revendication 1, où les orifices (218) d'alimentation en carburant comportent des orifices d'alimentation en carburant gazeux.

5. Mélangeur (114) de recirculation de gaz d'échappement de moteur selon l'une quelconque des revendications précédentes, chacune des tuyères convergentes-divergentes (214) étant alignée sur un même axe central (220) qu'une tuyère convergente (202) correspondante.

6. Mélangeur (114) de recirculation de gaz d'échappement de moteur selon l'une quelconque des revendications précédentes, où chacune des entrées (230) air-gaz d'échappement se trouve en amont d'une sortie correspondante (209) d'une de la pluralité de tuyères convergentes (202).

7. Mélangeur (114) de recirculation de gaz d'échappement de moteur selon l'une quelconque des revendications précédentes, où la pluralité de tuyères convergentes (202) s'étend à l'intérieur du carter (210) de récepteur de gaz d'échappement.

8. Mélangeur (114) de recirculation de gaz d'échappement de moteur selon l'une quelconque des revendications précédentes, où chacune des entrées (230) air-gaz d'échappement présente une plus grande aire que la sortie correspondante (209) de la tuyère correspondante de la pluralité de tuyères convergentes (202).

9. Mélangeur (114) de recirculation de gaz d'échappement de moteur selon l'une quelconque des revendications précédentes, où la pluralité de tuyères convergentes (202) comporte quatre tuyères convergentes (202) et la pluralité de tuyères convergentes-divergentes (214) comporte quatre tuyères convergentes-divergentes (214) correspondantes.

10. Mélangeur (114) de recirculation de gaz d'échappement de moteur selon l'une quelconque des revendications précédentes, où une partie divergente (214b) de la tuyère convergente-divergente (214) ne diverge pas de plus de 7°.

11. Mélangeur (114) de recirculation de gaz d'échappement de moteur selon l'une quelconque des revendications précédentes, comportant une pluralité de prises (356) de pression, destinées à détecter une pression, à une extrémité convergente (208) de chacune de la pluralité de tuyères convergentes (202).

12. Système (100) de moteur comportant :
un collecteur (104) d'admission de moteur configuré pour recevoir un mélange combustible configuré pour être brûlé à l'intérieur d'une chambre de combustion de moteur ;
un papillon (112) en amont du collecteur (104) d'admission, le papillon (112) étant configuré pour réguler un débit d'air entrant dans le collecteur (104) d'admission ;
un collecteur (106) d'échappement configuré pour recevoir des produits de combustion en provenance de la chambre de combustion ; et
le mélangeur (114) de recirculation de gaz d'échappement selon l'une quelconque des revendications précédentes, le mélangeur (114) de recirculation de gaz d'échappement étant positionné en aval du papillon (112) et en amont du collecteur (104) d'admission.

13. Système (100) de moteur selon la revendication 12, comportant un compresseur (118) en amont du papillon (112), le compresseur (118) étant configuré pour accroître une pression à l'intérieur du trajet d'écoulement.

14. Système de moteur selon la revendication 13, comportant une turbine (122) en aval du collecteur (106) d'échappement, la turbine (122) étant couplée au compresseur (118) et configurée pour faire tourner le compresseur (118).

15. Système (100) de moteur selon l'une quelconque des revendications 13 à 14, comportant un refroidisseur (110) de gaz d'échappement positionné à l'intérieur d'un trajet d'écoulement entre le collecteur (106) d'échappement et le mélangeur (114) de recirculation de gaz d'échappement, le refroidisseur (110) de gaz d'échappement étant configuré pour abaisser une température du gaz d'échappement avant le mélangeur (114) de recirculation de gaz d'échappement.

16. Procédé comportant les étapes consistant à :
accroître une vitesse et diminuer une pression d'un écoulement d'air d'admission de moteur à l'aide d'une première pluralité de tuyères convergentes (202) pour former une pluralité de jets libres sortant d'une tuyère correspondante de la pluralité de tuyères convergentes (202) ;
aspirer un écoulement d'échappement de moteur à travers une entrée (212) de gaz d'échappement, en réponse à la pression diminuée de chacun de la pluralité de jets libres, en aval de la première pluralité de tuyères convergentes (202) ;
mélanger, à l'aide d'une deuxième pluralité de tuyères convergentes en aval de la première pluralité de tuyères convergentes (202), chaque jet considéré de la pluralité de jets libres et l'écoulement d'échappement pour former une pluralité d'écoulements mélangés correspondant à la pluralité de jets libres, chacune de la deuxième pluralité de tuyères convergentes correspondant à une tuyère différente parmi la première pluralité de tuyères convergentes (202) ; et
accroître une pression et réduire une vitesse de la pluralité d'écoulements mélangés à l'aide d'une pluralité de tuyères divergentes correspondant chacune à une tuyère différente parmi la deuxième pluralité de tuyères convergentes ; **caractérisé en ce que** le procédé comporte en outre :
le mélange d'un jet de la pluralité de jets libres et de l'écoulement d'échappement pour former une des pluralités d'écoulements mélangés, comportant le mélange d'une partie de l'écoulement d'air, d'une partie de l'écoulement d'échappement, et d'une partie d'un écoulement de carburant, pour former un mélange de combustion ;
le procédé comportant en outre l'amenée de l'écoulement de carburant en amont des extrémités convergentes (208) de la première pluralité de tuyères convergentes (208) ; et
l'écoulement de carburant étant amené à partir d'orifices (218) d'alimentation en carburant qui sont situés sur un côté de chacune des tuyères convergentes (202) ou en aval d'une extrémité convergente (208) de chacune des tuyères convergentes (202) et en amont de l'entrée (212) de gaz d'échappement.

17. Procédé selon la revendication 16, où l'écoulement de carburant comporte un écoulement de carburant gazeux.

18. Procédé selon l'une quelconque des revendications 16 à 17, comportant le fait de diriger l'écoulement d'échappement d'un collecteur (106) d'échappement à un point en aval de la première pluralité de tuyères convergentes (202).
